# EUROPEAN PATENT APPLICATION

(11) **EP 0 675 148 A1**
(43) Date of publication of application: **04.10.1995**
(21) Application number: 95302139.1
(22) Date of filing: 30.03.1995
(51) Int. Cl.: C08G 73/10, G02F 1/1337, C08G 18/32, C08J 7/04

(54) **Polymer film for liquid crystal display element**

(30) Priority: 30.03.1994 JP 61330/94
(71) Applicant: TORAY INDUSTRIES, INC., Tokyo 103 (JP)
(72) Inventor: Kitamura, Kazuo, Ohtsu-shi, Shiga, 520 (JP); Ohkawa, Satoshi, Yamashina-ku, Kyoto, 607 (JP)
(74) Representative: Coleiro, Raymond

(57) **Abstract**

A polymer containing each of urea and imide units in the same molecule is suitable for providing a film capable of assuming an orientation rendering the film suitable for use in a liquid crystal display element.

The film may be formed as a laminate with a substrate and two such laminates may be held together in spaced apart face to face relation to provide the liquid crystal display element. Liquid crystal may be introduced in the space between the laminate to provide a liquid crystal display cell.

## Description

The present invention relates to a polymer for providing a film having orientation suitable for a liquid crystal display element, a film capable of such orientation, hereinafter called "a liquid crystal orientation film", a laminate comprising such a film and a liquid crystal display element having a laminate comprising a film having such orientation. In more detail, a liquid crystal display element comprises at least one laminate, which laminate comprises a liquid crystal orientation film on a substrate, which film comprises a specific polymer in which liquid crystal molecules are oriented at a large pre-tilt angle against the surface of the substrate.

Liquid crystal displays of an STN (Super Twisted Nemamatic) system are particularly excellent in contrast and visual characteristics and widely used as compared with liquid crystal displays of, for example, a TN (Twisted Nemamatic) system. The display element for this STN system must have its liquid crystal molecules oriented at a large pre-tilt angle against the surface of the substrate.

To orient liquid crystals in one direction, the practice is to form a resin film (liquid crystal orientation film, hereinafter sometimes simply referred to as an "orientation film") on the surface of a substrate and then to rub the surface of the orientation film in one direction. The resin used for the orientation film is generally a polyimide. The method of rubbing an orientation film composed of such a resin renders the liquid crystal molecules oriented almost in parallel to the substrate surface, and it is difficult to orient the molecules at a large pre-tilt angle.

As a method for orienting liquid crystal molecules at a large pre-tilt angle, it is known to form an inorganic film of silicon oxide, etc. on the surface of a substrate by oblique vapor deposition. However, this method is more complicated than the rubbing method and requires a high temperature for treatment disadvantageously for industrial application.

The rubbing method is simple as a liquid crystal orientation control method and is widely used, but as described above, in the case of an orientation film composed of an ordinary polyimide resin, it is difficult to orient the liquid crystal molecules at a large pre-tilt angle. Various proposals have been made to enlarge the pre-tilt angle by devising the structure of the polyimide resin used for the orientation film or using a special additive. For example, it has been proposed to mix into the resin composition a long-chain alkylamine (JP-A-87-262829), to use a monofunctional compound with a long-chain alkyl group together as a reacting species when a polyamic acid is synthesized as a precursor of the polyimide, for introducing the long-chain alkyl group at the ends of molecules (US-A-4749777 and JP-A-89-177514), to use a compound containing fluorine as a raw material of the polyimide, for preparing a fluorine-containing polyimide (JP-A-87-127827) or to use a diamine compound with a long-chain alkyl side chain for introducing the long-chain alkyl side chain into the polyimide (JP-A-90-282726). These conventionally proposed orientation film materials with high pre-tilt angles are based on polyimides, and even though polyimides have excellent properties as orientation film materials, they present a problem in that a high temperature of about 250 to 300°C or more is generally required for film formation and this restricts the materials available for the substrate. Thus, the inventors conducted studies in order to solve this problem, and found a polyurea based resin as an orientation film material with excellent properties which does not require any high temperature for film formation, and also found a resin composition suitable for an orientation film with a high pre-tilt angle based on the resin. The polyurea based resin and the resin composition have already been disclosed (JP-A-94-273768). The material can form an orientation film at a low temperature, i.e. lower than about 150°C and can give a high pre-tilt angle, and the orientation film has particularly excellent properties. However, the stability of the pre-tilt angle is still insufficient. That is, if a liquid crystal cell prepared using the resin as an orientation film is heated a higher than about 100°C, the pre-tilt angle tends to be gradually lessened, and it has been desired to make any improvement in this regard. Thus, the inventors have conducted studies in an attempt to develop a composition capable of providing a more stable pre-tilt angle without impairing the excellent features of the polyurea based resin, and as a result, have found, surprisingly, a particularly excellent composition.

A problem addressed by the invention is to provide a liquid crystal orientation film with a more stable pre-tilt angle without impairing the excellent features of the polyurea based resin.

Another problem addressed by the invention is to provide a liquid crystal orientation film which does not require high temperature heat treatment when it is produced.

Yet another problem addressed by the invention is to provide a liquid crystal orientation film with such properties as liquid crystal orienting capability, heat resistance, transparency, strength and adhesion to the substrate.

Surprisingly, we have found that a solution to the above problems may be provided by a polymer containing a polyurea based repeating unit and a polyimide based repeating unit simultaneously in the same molecule.

According to a first aspect, the invention provides a polymer capable of providing a film having orientation rendering the film suitable for a liquid crystal display element, which polymer contains a polyurea repeating unit and a polyimide repeating unit in the same molecule.

According to a second aspect the invention provides a liquid crystal orientation film comprising such a polymer, while according to third and fourth aspects, the invention provides respectively a laminate comprising such a film capable of orientation and a liquid crystal display element having a laminate comprising a film having such orientation. Preferably, the polymer comprises
a repeating unit represented by the following general formula (I):

(̵R¹-NHCONH-R²-NHCONH)̵ (I)

(where R¹ is a divalent organic residue or single bond and R² is a divalent organic residue),
and a repeating unit represented by the following general formula (II): 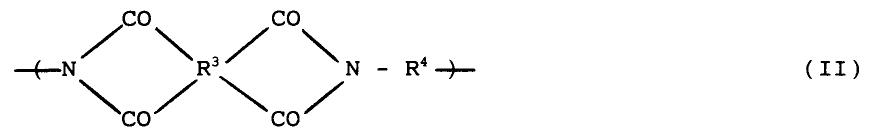
(where R³ is a tetravalent organic residue and R⁴ is a divalent organic residue)
simultaneously in the same molecule.

A polymer with a polyurea based repeating unit represented by the general formula (I) and a polyimide based repeating unit represented by the general formula (II) contained in each molecule used in the present invention can be synthesized by polyaddition of a diamine represented by the following formula (IV) and a diisocyanate represented by the following general formula (V), a tetracarboxylic dianhydride represented by the following general formula (VI) and a diamine represented by the following general formula (VII) in a solution, to obtain a precursor polymer containing urea bonds and an amic acid structure, and dehydrating and ring-closing the amic acid portion for conversion into an imide structure.

H₂N -R¹ -NH₂ (IV)

OCN - R² - NCO (V)

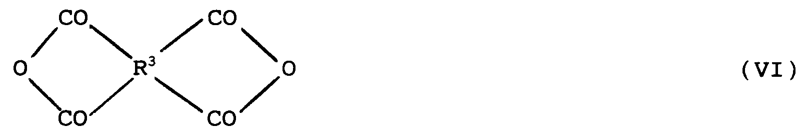

H₂N -R⁴-NH₂ (VII)

(where R¹ to R⁴ are as specified for the general formula (I) and (II)).

R² in the general formula (I) is preferably a divalent organic residue which has an aromatic ring, and more preferably a divalent organic residue selected from: 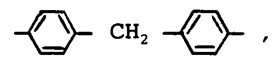 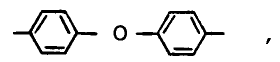 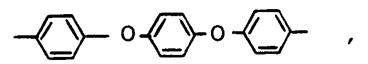 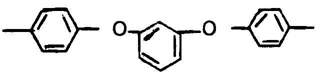
and
a single bond.

R² in the general formula (II) is preferably a divalent organic residue which has an aromatic ring, and more preferably a divalent organic residue selected from: 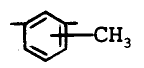
and

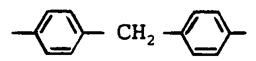

R³ in the general formula (I) is preferably a tetravalent organic residue which has an aromatic ring, and more preferably a tetravalent organic residue represented by the following general formula.

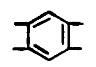

R⁴ in the general formula (II) is preferably a divalent organic residue which has an aromatic ring, more preferably m-phenylene or p-phenylene residue.

The polymer thus obtained is preferably soluble (more preferably at ambient temperature), in a solvent to an extent such that a solution of the polymer dissolved in a suitable solvent may be applied onto the surface of a substrate and dried, to obtain an orientation film with good properties.

The diamine compound represented by the general formula (IV) can be selected, for example, from aromatic diamines such as 4,4'-diaminodiphenyl ether, 3,4'-diaminodiphenyl ether, 3,3'-diaminodiphenyl ether, 4,4'-diaminodiphenylmethane, 4,4'-diaminodiphenyl sulfide, 4,4'-diaminodiphenylsulfone, o-tolidine, 3,4'-diaminobenzanilide, 4,4'-diaminobenzophenone, 2,2-bis(4-(4-aminophenoxy)phenyl)propane, bis(4-(4-aminophenoxy)phenyl)sulfone, 1,4-bis(4-aminophenoxy)benzene, 1,3-bis(4-aminophenoxy)benzene, 1,3-bis(3-aminophenoxy)benzene, 1,5-diaminonaphthalene, m-phenylenediamine, p-phenylenediamine, m-toluylenediamine, 2,2'-dihydroxybenzidine, 3,5-diaminophenol, 3,5-diaminobenzoic acid, m-xylylenediamine and p-xylylenediamine, aliphatic or alicyclic diamines such as tetramethyleneediamine, pentamethylenediamine, hexamethylenediamine, octamethylenediamine, dodecamethylenediamine, 1,4-diaminocyclohexane, 4,4'-bis(aminocyclohexyl)methane and isophoronediamine, diaminoorganosiloxanes represented by the following general formula: 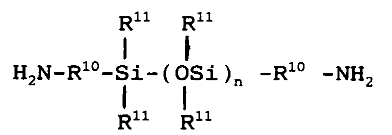
(where R¹⁰ is a divalent hydrocarbon group; R¹¹ is a monovalent hydrocarbon group; and n is an integer of 1 or more; R¹⁰ and R¹¹ can be the same or different), hydrazine (anhydrous or monohydrate), isophthalic acid dihydrazide, terephthalic acid dihydrazide and oxalic acid dihydrazide. Any one or more in combination of these diamines can be used.

The diisocyanate represented by the general formula (V) can be selected, for example, from aromatic diisocyanates such as 2,4-tolylene diisocyanate, phenylene diisocyanate, 4,4'-diphenylmethane diisocyanate, 4,4'-diphenyl ether diisocyanate, 4,4'-diphenyl diisocyanate, tolidine diisocyanate, p-xylylene diisocyanate and m-xylylene diisocyanate, alicyclic diisocyanates such as isophorone diisocyanate, 1,3-bis(isocyanatomethyl)cyclohexane, 1,4-bis(isocyanatomethyl)cyclohexane and 4,4'-dicyclohexylmethane diisocyanate, and aliphatic diisocyanates such as butane diisocyanate, hexamethylene diisocyanate, octamethylene diisocyanate and lysine diisocyanate. Any one or more in combination of these diisocyanates can be used.

The tetracarboxylic dianhydride represented by the general formula (VI) can be selected, for example, from aromatic tetracarboxylic dianhydrides such as pyromellitic dianhhydride, 3,3', 4,4'-benzophenonetetracarboxylic dianhydride and 3,3',4,4'-biphenyltetracarboxylic dianhydride, alicyclic tetracarboxylic dianhydrides such as 1,2,3,4-cyclopentanetetracarboxylic dianhydride and bicyclo(2,2,2)-oct-7-ene-2,3,5,6-tetracarboxylic dianhydride, aliphatic tetracarboxylic dianhydrides such as 1,2,3,4-butanetetracarboxylic dianhydride. Any one or more in combination of these tetracarboxylic dianhydrides can be used.

The diamine represented by the general formula (VII) is preferably a diamine with one or more substituent groups represented by the following general formula (III), and in this case, an especially high pre-tilt angle can be induced.

-X -R⁵ -R⁶ (III)

In the above formula, X is a divalent connecting residue or single bond, and the connecting residue can be selected, for example, from -CONH-, -NHCO-, -COO-, -OCO-, -O-, -NHCONH- or -CO-. R⁵ is a divalent organic residue or single bond, and the organic residue preferably has 2 to 50 carbon atoms and can be selected, for example, from p-phenylene, m-phenylene, p-toluylene, m-toluylene, 1,5-naphthylene, 1,8-naphthylene and 1,4-cyclohexylene. R⁶ is an alkyl group with 12 or more carbon atoms, preferably 14 to 20 carbon atoms or a fluoroalkyl group with 1 or more carbon atoms, preferably up to 20 carbon atoms inclusive. R⁶ is preferably an alkyl group with 14 to 20 carbon atoms. The diamine compound represented by the general formula (VII) can be selected, for example, from 3,5-diamino-N-octadecyl-benzamide, 4-octadecyloxy-1,3-diaminobenzene, 3,5-diaminobenzoic acid hexadecyl ester, 5-dodecyl-1,3-diaminobenzene, 4-(1H,1H,2H,2H-perfluorodecyloxy)-1,3-diaminobenzene, 3,5-diamino-N-(4-trifluoromethylphenyl)benzamide, 1,1,1,3,3,3-tetrafluoro-2,2-bis(4-(4-aminophenoxy)phenyl)propane and 2,2-bis-4-(4-aminophenoxy)phenyl)hexafluoropropane. Any one or more in combination of these diamines can be used.

Preferably more than 30 mol%, more preferably more than 50 mol% the respective reacting species (IV) to (VII) are of aromatic compounds. If the aromatic ingredient content is less than 30 mol%, the polymer produced is low in heat resistance, and the orientation film formed is poor in performance.

As for the amounts of the respective raw materials, the molar ratio of the total quantity of ingredients (IV) and (VII) to the total quantity of the ingredients (V) and (VI) is preferably 0.7 to 1.5, more preferably about 0.9 to 1.1. The closer to 1 is the ratio, the larger is the molecular weight of the polymer produced, such larger molecular weights being preferred.

The polymer of the present invention can be generally synthesized, as described before by polyaddition of the raw materials (IV) to (VII) in a solvent capable of dissolving the produced polymer, to synthesize a precursor polymer, and dehydrating and ring-closing the amic acid portion for conversion into imide rings. In the polyaddition reaction as the first stage, polymers of various structures can be prepared, depending on how the raw materials are mixed. To form the repeating unit represented by the general formula (II), the diamine of general formula (VII) must be allowed to react with the acid anhydride of general formula (VI) at first. Aside from this condition, there is no special restriction in the conditions for preparing the polymer. Depending on the conditions, repeating units other than the repeating units (I) and (II), for example, a polyimide repeating unit produced by the reaction between the ingredients (IV) and (VII) and a polyurea repeating unit produced by the reaction between the ingredients (V) and (VII) may be produced simultaneously, but these repeating units can be contained in the polymer without any problem. As a preferable example of production conditions, the ingredients (VI) and (V) are caused to react in a solvent while the ingredients (VI) and (VII) are caused to react in a solvent separately, and both the reaction solutions are mixed, for further reaction. In this case, the ratio of the ingredients (IV) and (V) must not be equimolar, and this applies also to the ratio of the ingredients (VI) and (VII). There is a restricting range of molar ratios among the four ingredients as described before.

The ingredient (VII) induces the pre-tilt angle, and the content of the ingredient decides the pre-tilt angle of the orientation film.

That is, with reference to the desired pre-tilt angle, the quantity of the ingredient (VII) used is decided. In general, when the total quantity of the ingredients (IV) to (VII) is 100 moles, the quantity of the ingredient (VII) used is preferably about 0.5 to 20 moles. The quantity of the ingredient (VI) used is preferably larger than the quantity in moles of the ingredient (VII), more preferably about 0.6 to 30 mol% of the total quantity of all the ingredients.

Once the quantities of the ingredients (VI) and (VII) are decided, the quantities of the ingredients (IV) and (V) are automatically decided with reference to the conditions mentioned before.

If the respective raw materials are used in these quantities, the ratio of the repeating unit represented by the general formula (I) to the repeating unit represented by the general formula (II) contained in the polymer produced can be kept in a range of 99/1 to 40/60, preferably 98/2 to 60/40. If the quantity of the repeating unit represented by the general formula (I) is too small, the solubility of the polymer and the properties of the paint film are poor, and if the quantity of the repeating unit represented by the general formula (II) is too small, the pre-tilt angle is too small.

The reaction of the above ingredients can be effected by dissolving or suspending the respective ingredients in a suitable solvent, and letting them react at -50 to 200°C, preferably about 0 to 100°C for about 10 minutes to 24 hours.

The solvent used here is not especially restricted as far as it does not substantially react with the respective raw materials and can dissolve the produced polymer, and can be preferably selected, for example, from N-methyl-2-pyrrolidone (NMP), N,N'-dimethylacetamide (DMAc), dimethylformamide, dimethyl sulfoxide, y-butyrolactone and 1,3-dimethyl-2-imidazolidinone (DMI).

The polymer (precursor polymer) thus produced must be further dehydrated and ring-closed, to produce an imide structure. It can also be directly applied onto a substrate, to cause ring closure reaction in the step of baking, but in this case, to cause sufficient ring closure reaction, a high temperature of higher than about 250°C is required. To produce an orienting material which can be baked at a low temperature, it is preferable to effect the dehydration and ring closure reaction beforehand.

The dehydration and ring closure reaction can be effected thermally or chemically, but a chemical reaction in a solution is advantageous since the reaction is smooth without causing side reaction. For the chemical dehydration and ring closure reaction, adding a dehydrating agent for reaction is effective, and especially it is effective to use acetic anhydride as the dehydrating agent and a tertiary amine as a catalyst. If pyridine is used as the amine, ring closure reaction takes place easily even at room temperature.

A solvent which does not dissolve the polymer produced, for example, water or alcohol, etc. can be added to the polymer solution obtained as above, for isolating the polymer as a solid, and the solid polymer can be dissolved in a suitable solvent, for use as a solution to be applied to form a liquid crystal orientation film. The reaction solution containing the polymer as it is can also be used, or the reaction solution remaining after evaporating and removing the low boiling point ingredients can also be used after having been diluted to a suitable concentration.

The solvent used here is an organic solvent similar to the solvent used for synthesizing the polymer. In addition to the solvents described above, other general solvents such as ethers, esters, ketones, hydrocarbons and halogenated hydrocarbons, can also be mixed to be used to such an extent that the polymer is not precipitated. Those solvents include, for example, acetone, methyl ethyl ketone, methyl isobutyl ketone, cyclohexanone, ethyl acetate, butyl acetate, diethyl oxalate, dioxane, tetrahydrofuran, ethylene glycol monomethyl ether, ethylene glycol dimethyl ether, ethylene glycol monomethyl ether acetate, ethylene glycol monobutyl ether, ethylene glycol monobutyl ether acetate, methylene chloride, chloroform, 1,2-dichloroethane, 1,4-dichlorobutane, trichloroethane, chlorobenzene, o-dichlorobenzene, benzene, toluene, xylene, hexane and cyclohexane. The proper quantity of the organic solvent depends on the polymerization degree of the polymer and the coating method, but is usually 0.2 to 50 wt%, preferably about 1 to 20 wt% by weight of solid polymer alone.

The polymer solution prepared as above may be applied onto a substrate by, for example, spin coating, roll coating or printing, and subsequently heated and dried, preferably at 80 to 300°C, more preferably 100 to 200°C for 5 to 180 minutes, especially preferably about 30 to 90 minutes, to form, on the substrate, a liquid crystal orientation film in accordance with the invention. The polymer of the present invention is not required to be dehydrated and ring-closed, unlike general polyimides, and simply removing the solvent is required. Thus, a liquid crystal orientation film with good properties can be formed under mild drying conditions, at a temperature lower than 150°C.

The thickness of the liquid crystal orientation film is usually 0.005 to 5 µm, preferably 0.01 to 2 µm.

As required, a silane based or titanate based or other coupling agent can also be applied onto the substrate for improving the adhesion to the substrate. The coupling agent can also be used by being added to the polymer solution to be applied.

A laminate in accordance with the invention may be obtained by forming the film on a base material, preferably serving as both a substrate as described above and providing a transparent conductive layer, suitable for use in a liquid crystal display element. As described later in more detail, the film may be provided, for example, by rubbing, with an orientation suitable for use in a liquid crystal display element. Preferably the laminate therefore comprises each of a transparent substrate, a transparent conductive layer, preferably on the surface of the substrate, and a film in accordance with the invention capable of, more preferably having, orientation suitable for use in a liquid crystal display element.

A liquid crystal element in accordance with the invention comprises at least one such laminate the polymer film of which has an orientation such as to provide a pre-tilt angle and preferably comprises a pair of such laminates held in spaced apart relationship with one another with the polymer films of the respective laminates in face to face relationship. Liquid crystal may be introduced into the space between the laminates to provide a liquid crystal cell in accordance with the invention.

In more detail, the film of the laminate may be provided with the desired orientation by rubbing the liquid crystal orientation film thereof around which a roller cloth such as nylon is wound. Two substrates with an orientation film each thus prepared are arranged to face each other, and liquid crystal is injected into the clearance between the substrates, to prepare a liquid crystal display cell of the present invention.

In the rubbing, if the individual pixel orienting method is used, the practical angle of visibility for graduation display can be enlarged. The individual pixel orienting method includes the mask rubbing method and simultaneous rubbing method ("2nd Polymer Material Forum" p.22 to 25 (1993)).

In the mask rubbing method, the entire surface of the orientation film formed on a substrate is rubbed (first rubbing), and coated with a photo resist, exposed and developed, to expose the orientation film only partially (regions A). With the resist as a mask, the orientation film is rubbed (second rubbing) in a direction different from that of the first rubbing. Thus, the orientation film is rubbed twice in the regions A which are oriented in the second rubbing direction. Then, the resist film is removed, to expose the remaining regions which are oriented in the first rubbing direction. Thus, the orientation film obtained is different in a pre-tilt direction from pixel to pixel.

In the simultaneous rubbing method, a first orientation film is formed on a substrate, and a second orientation film different in pre-tilt angle from the first orientation film is formed on the first orientation film. The second orientation film is patterned using a resist, etc., to partially expose the first orientation film. The patterned orientation films different in pre-tilt angle on a substrate thus obtained are rubbed at the same time, to obtain an orientation film different in pre-tilt angle from pixel to pixel.

A polymer in accordance with a first aspect the present invention, used for forming the liquid crystal orientation film, may comprise repeating units represented by the general formulae (I) and (II), but may additionally comprise repeating units other than these repeating units. The other repeating units include, for example, amide bond, ester bond, ether bond and urethane bond. However, in this case, it is desirable that the total quantity of the repeating units represented by the general formulae (I) and (II) corresponds to 50 mol% or more, preferably 70 mol% or more of the entire polymer. Moreover, a film in accordance with a second aspect of the invention may comprise such a polymer in accordance with the first aspect, but may additionally comprise a polymer other than the above polymer. Such other polymer can be selected, for example, from polyamides, polyimides, polyesters, acrylic polymers and polyvinyl alcohol. In this case, it is preferable that the repeating units represented by the general formulae (I) and (II) account for 50 mol% or more, preferably 70 mol% or more of all the polymers.

Preferred embodiments of present invention are now described in more detail with reference to the following Examples.

In the following Examples of the present invention and comparative Examples, to evaluate the performance of each liquid crystal orientation film the initial pre-tilt angle and the pre-tilt angle after having been heated were measured. A pre-tilt angle of more than about 3 degrees is sufficiently practical, but a pre-tilt angle of at least 3.5° is preferred. In practical application, it is demanded that the pre-tilt angle of the film after having been heated is not too low as compared with the set initial pre-tilt angle. It is preferable that the pre-tilt angle is not reduced by more than 20% of the pre-tilt angle before heating to 120°C for 3 hours.

### Example 1

9.2 grams (0.046 mole) of 4,4'-diaminodiphenyl ether was dissolved into 40 g of DMAc, and a solution with 7.40 g (0.0425 mole) of 2,4-tolylene diisocyanate (TDI) dissolved in 20 g of DMAc was added to the solution with stirring at room temperature to obtain a solution (1). On the other hand, 1.61 g (0.004 mole) of 3,5-diamino-N-octadecylbenzamide was added into 20 g of DMAc, and furthermore 1.63 g (0.0075 mole) of pyromellitic dianhydride (PMDA) was added into the mixture. The mixture was stirred sufficiently until the solid was completely dissolved to obtain a solution (2), in a container. Solution (2) was added to the solution (1) prepared before, with stirring, to obtain a mixed solution (3). The container in which solution (2) was present was rinsed with 20 g of DMAc, and the rinse was added to mixed solution (3) to provide a mixed solution (4). The mixed solution (4) was stirred at room temperature for 2 hours, to obtain a consistent polymer solution (5). To the solution (5), a mixture consisting of 25 g of pyridine and 15 g of acetic anhydride was added, and the mixture was sufficiently mixed and allowed to stand overnight at room temperature. The solution became gelled. Fifty grams of DMAc was added to the gel, and the mixture was heated in a 100°C oil bath. The gel was dissolved to form an ordinary solution. The solution was poured into 2 liters of water with vigorous stirring, to precipitate a polymer. The precipitated polymer was recovered by filtration, and washed with distilled water and then methanol sufficiently, then dried at 100°C for 5 hours.

The polymer obtained was dissolved into a mixture consisting of 2 parts by weight of DMAc and 1 part by weight of NMP to achieve a concentration of 4 wt%, and the solution was filtered by a filter of 0.5 µm in pore size, to obtain a solution for coating.

The above solution for coating was applied onto a glass substrate with a transparent conductive film composed of ITO, using a spinner at 2000 rpm in 30 seconds, and dried at 150°C for 1 hour, to evaporate the solvent, for forming a liquid crystal orientation film. The film was rubbed by a rubbing device comprising a roll with nylon felt wound around it at a roll speed of 800 rpm at a stage travelling speed of 50 mm/second five times. The rubbing did not damage the paint film at all.

A pair of the substrates with a liquid crystal orientation film on each of them thus prepared were arranged to have the orientation films facing each other with the rubbing directions kept in antiparallel, and a 2 µm thick polyethylene terephthalate film ("Lumilar" produced by Toray Industries, Inc.) cut as a 2 mm wide strip was kept between them as a spacer. An epoxy sealant ("Stract Bond" ES-4500 produced by Mitsui Toatsu Chemicals, Inc.) was applied to the sides of the substrates and hardened at 110°C for 30 minutes, for sealing. Inside the element, liquid crystal (ZLI-2293 produced by Merck) was poured in vacuum, and the inlet was closed by the epoxy sealant and heated at 110°C for 30 minutes, for the hardening of the sealing resin and the isotropic treatment of the liquid crystal.

The liquid crystal cell sample thus prepared was rotated in the cross nicol of a polarization microscope and observed. Clear light and darkness were observed, and it was found that the liquid crystal was well and evenly oriented in the rubbing directions. The pre-tilt angle of the liquid crystal cell was measured by the magnetic field capacity method and found to be 11 degrees. The pre-tilt angle of the cell was measured again after having been heated to 120°C for 3 hours, and found to be 10.5 degrees, showing little difference.

### Example 2

The same procedure as that of Example 1 was carried out, except that 9.1 g (0.046 mole) of 4,4-diaminodiphenylmethane was used instead of 4,4'-diaminodiphenyl ether. As in Example 1, the liquid crystal was well oriented, and the pre-tilt angle was 10 degrees. After the liquid crystal cell had been heated at 120°C for 3 hours, the pre-tilt angle was 9.8 degrees.

### Example 3

The same procedure as that of Example 1 was carried out, except that 1.50 g (0.004 mole) of hexadecyl 3,5-diaminobenzoate was used instead of 3,5-diamino-N-octadecyl-benzamide. The pre-tilt angle was 8 degrees, and after having heated the cell at 120°C for 3 hours, the angle was 7 degrees.

### Example 4

The same procedure as that of Example 1 was carried out, except that 2.21 g (0.0075 mole) of 3,3',4,4'-biphenyltetracarboxylic dianhydride was used instead of pyromellitic dianhydride. The pre-tilt angle was 5.1 degrees, and after having heated the cell at 120°C for 3 hours, the angle was 4.5 degrees.

### Example 5

8.5 grams (0.0425 mole) of 4,4-diaminodiphenyl ether was dissolved into 40 g of NMP, and a solution with 16.6 g (0.0375 mole) of TDI dissolved in 20 g of DMAc was added to the solution with stirring. On the other hand, 3.89 g (0.0075 mole) of 2,2-bis-4-[(4-aminophenoxy)phenyl]hexafluoropropane was dissolved into 30 g of DMAc, and 2.71 g (0.0125 mole) of PMDA was added into the mixture. The mixture was stirred sufficiently until the solid became dissolved. This solution and the solution prepared before were mixed and stirred at room temperature for 2 hours, to obtain a precursor polymer solution. As in Example 1, treatment with pyridine and acetic anhydride was effected to obtain polymer capable of orientation and a liquid crystal cell was prepared. The pre-tilt angle was 4 degrees, and after having heated the cell at 120°C for 3 hours, the angle was 3.5 degrees.

### Example 6

3.84 grams (0.0194 mole) of 4,4-diaminodiphenylmethane was dissolved into 15 g of NMP, and a solution with 3.31 g (0.019 mole) of TDI dissolved in 10 g of NMP was added to the solution with stirring. On the other hand, 0.242 g (0.0006 mole) of 3,5-diamino-N-octadecylbenzamide was added into 5 g of DMAc, and 0.217 g (0.001 mole) of PMDA was added for reaction with stirring. This solution and the solution prepared previously were mixed and stirred in a three-neck flask with a reflux condenser at room temperature for 2 hours. To the polymer solution obtained, 5 g of triethylamine and 3 g of acetic anhydride were added, and the mixture was heated at 80°C for 30 minutes with stirring in an oil bath. Then, 5 g of ethyl alcohol was added, and the mixture was heated for further 15 minutes. The reflux condenser was replaced by a connecting pipe for distillation, and a nitrogen introducing pipe was attached to one port. The oil bath temperature was raised to 100°C, and while nitrogen was fed gently, low boiling point ingredients were distilled away with stirring. Subsequently, the residue was diluted by DMAc to a solid concentration of 4%, to prepare a solution for coating.

The above solution was used to form an orientation film on a substrate and a liquid crystal cell was prepared as in Example 1. The pre-tilt angle of the liquid crystal cell obtained was measured and found to be 8 degrees. The cell was heated at 120°C for 3 hours, and the pre-tilt angle was measured and found to be 7 degrees.

### Comparative Example

1.8 grams (0.009 mole) of 4,4'-diaminodiphenyl ether and 0.4 g (0.001 mole) of 3,5-diamino-N-octadecylbenzamide were dissolved into 10 g of NMP, and with stirring, a solution with 1.74 g (0.01 mole) of TDI dissolved in 7 g of NMP was added dropwise. The mixture was stirred for further 1 hour. The polymer solution obtained was diluted by DMAc to achieve a solid concentration of 4%, and the mixture was filtered by a filter of 0.5 µm in pore size, to prepare a solution for coating. As in Example 1, an orientation film was formed, and a liquid crystal cell was prepared. The strength of the orientation film and the orientation of liquid crystal were good. The pre-tilt angle of the liquid crystal cell was measured and found to be 12 degrees. The liquid crystal cell was heated at 120°C for 3 hours, and the pre-tilt angle was measured again and found to be only 6 degrees, representing a considerable reduction in pre-tilt angle.

In Examples 1 to 6, the initial pre-tilt angles were larger than 3.5 degrees, and the angles after completion of heating were only slightly smaller. On the other hand, in the comparative example, even though the initial pre-tilt angle was as high as 12 degrees, the decline after heating was great, making practical application difficult.

In a liquid crystal display element embodying the present invention, since the polymer film as a liquid crystal orientation film does not require high temperature heat treatment when it is produced, and allows treatment at a temperature even lower than about 150°C, the production is easy. Furthermore, there is no possibility of damaging the other element materials, and the substrate used can not only be a glass substrate but also a plastics substrate lower in heat resistance. Moreover, the liquid crystal orientation film is excellent in such properties as liquid crystal orienting capability, heat resistance, transparency, strength and adhesion to the substrate, and is especially large and stable in pre-tilt angle. Accordingly, the liquid crystal element of the present invention can be used very advantageously as a liquid crystal display element of an STN system.

## Claims

1. A film capable of assuming an orientation rendering the film suitable for use in a liquid crystal display element, which film comprises a polymer containing a polyurea based repeating unit and a polyimide based repeating unit simultaneously in the same molecule.

2. A film according to claim 1, wherein the polymer contains a repeating unit represented by the following general formula (I):
(̵R¹-NHCONH-R²-NHCONH)̵ (I)
(where R¹ is a divalent organic residue or single bond and R² is a divalent organic residue),
and a repeating unit represented by the following general formula (II): 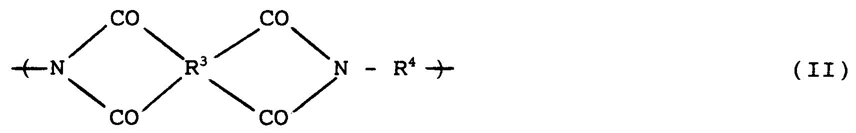 (where R³ is a tetravalent organic residue and R⁴ is a divalent organic residue)
simultaneously in the same molecule.

3. A film according to claim 2, wherein R⁴ in the general formula (II) is a residue derived from a diamine having at least one substituent group represented by the following general formula (III):
-X -R⁵ -R⁶ (III)
(where X is a divalent connecting residue or single bond; R⁵ is a divalent organic residue or single bond; and R⁶ is an alkyl group having at least 12 carbon atoms or a fluoroalkyl group having at least one carbon atom).

4. A film according to claim 2 or claim 3, wherein R¹ in the general formula (I) is a divalent organic residue which has an aromatic ring.

5. A film according to claim 4, wherein R¹ in the general formula (I) is at least one divalent organic group selected from: 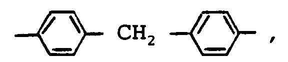 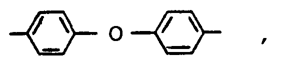 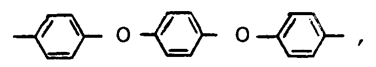 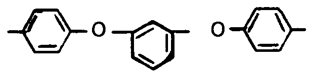 and
a single bond.

6. A film according to claim 2 or claim 3, wherein R¹ in the general formula (I) is a single bond.

7. A film according to any one of claims 2 to 6, wherein R² in the general formula (I) is a divalent organic residue which has an aromatic ring.

8. A film according to claim 7, wherein R² in the general formula (I) is at least one divalent organic residue selected from: 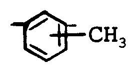 and

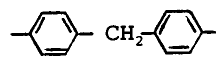

9. A film according to any one of claims 2 to 8, wherein R³ in the general formula (II) is a tetravalent organic residue which has an aromatic ring.

10. A film according to any one of claims 2 to 9, wherein R³ in the general formula (II) is a tetravalent organic residue represented by the following general formula

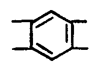

11. A film according to any one of claims 2 to 10, wherein R⁴ in the general formula (II) is a divalent organic residue which has an aromatic ring.

12. A film according to claim 11, wherein R⁴ in the general formula (II) is a m-phenylene or p-phenylene residue.

13. A film according to claim 3, wherein R⁶ in the general formula (III) is a C₁₄₋₂₀ alkyl group.

14. A film according to any one of claims 2 to 13, wherein the mole ratio of the repeating unit represented by the general formula (I) to the repeating unit represented by the general formula (II) contained in the polymer is 98/2 to 60/40.

15. A laminate comprising a base material and, on the base material, a film of a polymer containing a polyurea based repeating unit and a polyimide based repeating unit simultaneously in the same molecule, which film is capable of assuming an orientation such as to provide a pre-tilt angle.

16. A liquid crystal display element comprising laminate according to claim 15, wherein the orientation of the film provides a pre-tilt angle.

17. A liquid crystal display element according to claim 16, comprising a pair of the laminates held in spaced apart relationship with one another and having respective said films of the laminate in face to face relationship.

18. A liquid crystal display cell comprising a liquid crystal display element according to claim 17 and in the space between the laminates liquid crystal.

19. A polymer capable of providing a film capable of assuming an orientation rendering the film suitable for use in a liquid crystal display element, which polymer contains each of polyurea based and polyimide based units in the same molecule.
